# EUROPEAN PATENT SPECIFICATION

(11) **EP 2 925 113 B1**
(45) Date of publication and mention of the grant of the patent: **21.12.2016**
(21) Application number: 13771228.7
(22) Date of filing: 20.09.2013
(51) Int. Cl.: A01B 73/06, A01D 78/10

(54) **AGRICULTURAL DEVICE AND METHOD FOR PROCESSING CROP**
LANDWIRTSCHAFTLICHES GERÄT UND VERFAHREN FÜR DIE BEARBEITUNG VON ERNTEGUT
DISPOSITIF AGRICOLE ET PROCÉDÉ POUR TRAITER CULTURES

(30) Priority: 27.11.2012 NL 2009889
(43) Date of publication of application: 07.10.2015
(73) Proprietor: Forage Innovations B.V., 3147 PB Maassluis (NL)
(72) Inventor: VAN DEN ENGEL, Alfonsus Jacobus, NL-3147 PA Maassluis (NL)
(74) Representative: Octrooibureau Van der Lely N.V.
(86) International application number: PCT/NL2013/050675
(87) International publication number: WO 2014/084723

(56) References cited:
- EP-A1- 1 859 670
- EP-A1- 2 179 641
- DE-A1-102011 014 419

## Description

The invention relates to an agricultural device for processing crop which lies loosely on the ground, for example mowed grass, which agricultural device comprises a trailer which can be coupled to a tractor, which trailer is provided with:
- an undercarriage having a central longitudinal axis, which undercarriage is provided with:
   - a coupling member for coupling to a tractor,
   - a plurality of wheels by means of which the undercarriage can travel on the ground,
- a crop-processing device which is provided with:
   - a tilting frame which is connected to the undercarriage so as to be tiltable about a tilting axis which runs substantially transversely with respect to the longitudinal axis of the undercarriage,
   - two supporting arms which extend on either side of the tilting frame, which supporting arms are each connected to the tilting frame so as to be pivotable about a swivel axis which runs substantially transversely with respect to the tilting axis, and which supporting arms each comprise a plurality of supporting arm portions which are connected to each other so as to be hingable about hinge axes which run substantially parallel to the swivel axis of said supporting arm,
   - crop-processing members which are fitted to the supporting arm portions of the supporting arms so as to be rotatable,
wherein the crop-processing device is movable from a transport position to an operating position, wherein,
in the transport position, the tilting frame has a raised position in which the swivel axes of the supporting arms run substantially vertically, and each supporting arm has a collapsed position, in which said supporting arm runs substantially parallel to the longitudinal axis of the undercarriage, and
when moving the crop-processing device from the transport position to the operating position, each supporting arm is swung outwards about the swivel axis thereof, from the collapsed position into an extended position, in which said supporting arm extends outwards substantially transversely with respect to the longitudinal axis of the undercarriage, and subsequently the tilting frame is tilted downwards about the tilting axis, from the raised position to a lowered position, in which the crop-processing members are oriented for processing crop which is lying loosely on the ground, in which case the operating position has been reached. The agricultural device according to the invention is, for example, a tedder.

NL 1031852 C discloses a tedder. Said tedder comprises a trailer with an undercarriage and a crop-processing device. The undercarriage has a central longitudinal axis which corresponds to the direction of travel of the tedder. The undercarriage comprises a drawbar which is connectable to a tractor, and two wheels which can travel on the ground. A tilting frame is connected to the undercarriage via a hydraulic lifting cylinder so as to be tiltable about a tilting axis which runs substantially transversely with respect to the longitudinal axis of the undercarriage. Supporting arms are present on either side of the tilting frame, which supporting arms are each connected to the tilting frame via hydraulic extension cylinders so as to be pivotable about a swivel axis which runs substantially transversely with respect to the tilting axis. Each supporting arm is composed of a plurality of supporting arm portions which are connected to each other so as to be hingable about hinge axes which run substantially parallel to the swivel axis of said supporting arm. Sets of wheels with rotatable crop-processing members are attached to the supporting arm portions.

The crop-processing device is movable between a transport position and an operating position. In the transport position, the tilting frame is in a raised position, in which the swivel axes of the supporting arms run substantially vertically. In the transport position, the supporting arms each have a collapsed position in which the supporting arms each run substantially parallel to the longitudinal axis of the undercarriage. In order to move the crop-processing device from the transport position to the operating position, each supporting arm is swung outwards by means of the associated hydraulic extension cylinder about the swivel axis thereof into an extended position, in which said supporting arm extends outwards substantially transversely with respect to the longitudinal axis of the undercarriage.

In the collapsed position of the supporting arms, the centre of gravity of the crop-processing device, i.e. the tilting frame with the supporting arms and rotatable crop-processing members connected thereto, are in a position, viewed in the direction of the longitudinal axis, in front of the tilting axis of the tilting frame. When extending the supporting arms, i.e. swinging the supporting arms into the extended position by means of the extension cylinders, the centre of gravity of the tilting frame with the supporting arms and rotatable crop-processing members connected thereto is, again viewed in the direction of the longitudinal axis, meant to be moved beyond the tilting axis (dead point position) to a position behind the latter. In this case, the tilting frame with the supporting arms and rotatable crop-processing members connected thereto descends into the operating position on account of its own weight.

However, if the supporting arms are swung outwards from the collapsed position, one or more supporting arm portions may remain in a slightly forwardly tilted position. As a result thereof, there is a risk, when moving the crop-processing device from the transport position to the operating position, of the centre of gravity of the combination of tilting frame, supporting arms and crop-processing members, viewed in the direction of the longitudinal axis, remaining situated in front of the tilting axis of the tilting frame. This means that when the supporting arms are being extended, the crop-processing device does not move through the dead point position and therefore does not descend into the operation position on account of its own weight. In this case, for example, the driver of the tractor has to get out and manually pull the supporting arm portions backwards in order to cause the crop-processing device to move through the dead point and into the operating position. However, this is time-consuming and laborious.

It is an object of the invention to provide an improved agricultural device.

This object is achieved according to the invention by the fact that each supporting arm is provided with at least one actuating member which is arranged between two adjacent supporting arm portions of said supporting arm which are hingably connected to each other and the actuating members are configured to bring and/or keep said supporting arm portions of each supporting arm substantially in line with each other while the supporting arms are being swung outwards from the collapsed position to the extended position, in such a manner that the centre of gravity of the crop-processing device, in the extended position of the supporting arms, viewed in the direction of the longitudinal axis of the undercarriage, is situated behind the tilting axis and the crop-processing device descends into the operating position on account of its own weight.

According to the invention, in the transport position, the supporting arms are each swung inwards about the swivel axis thereof into the collapsed position, i.e. the supporting arms are folded in and run approximately parallel to the longitudinal axis of the undercarriage. In the collapsed position, the supporting arms rest on, for example, supports of the undercarriage of the trailer. In order to move the crop-processing device into the operating position, the supporting arms are in this case first lifted from the supports and subsequently swung outwards until they reach the extended position. According to the invention, the actuating members are actuated while the supporting arms are being extended. The actuating members are arranged between adjacent supporting arm portions of the supporting arms which are hingably connected to each other. According to the invention, said supporting arm portions are therefore pushed apart/away from each other by the actuating members, i.e. said supporting arm portions hinge with respect to each other in such a way that said supporting arm portions come to lie substantially in line with each other and/or are kept in said orientation. As a result thereof, the actuating members prevent the supporting arm portions from remaining tilted forwards when the supporting arms are being extended. It is thus ensured, when swinging the supporting arms outwards, that the centre of gravity of the crop-processing device, viewed in the direction of the longitudinal axis of the undercarriage, moves from a position in front of the tilting axis, past the tilting axis, and to a position behind the tilting axis. In other words, when the supporting arms are being extended, the centre of gravity of the combination of tilting frame, supporting arms and crop-processing members is moved, viewed in the direction of the longitudinal axis, through the dead point position until it is situated behind the tilting axis, so that the crop-processing device descends into the operating position on account of its own weight. According to the invention, the crop-processing device can therefore be brought into the operating position in a reliable manner.

According to the invention, it is preferred if the actuating members each comprise a hydraulic cylinder. The use of hydraulic cylinders is advantageous with regard to the reliability and service life of the agricultural device. In this case, it is possible for each of the hydraulic cylinders to be single-acting.

In a preferred embodiment, each actuating member is configured in such a manner that the hinged connection between the two hingably connected supporting arm portions between which said actuating member is arranged is released by said actuating member in the operating position of the crop-processing device. If each of the actuating members is configured as a hydraulic cylinder, each hydraulic cylinder is pressurized when the supporting arms are being extended and the pressure is removed in the operating position of the crop-processing device. In this case, the hydraulic cylinders are therefore pressure cylinders.

Each of the supporting arms comprises a number of supporting arm portions which are hingably connected to each other about hinge axes which extend substantially parallel to the swivel axis of said supporting arm. In the operating position of the crop-processing device, said hinge axes run substantially parallel to the longitudinal axis of the undercarriage, i.e. substantially in the direction of travel. The actuating members are arranged between in each case two adjacent supporting arm portions which are hingably connected to each other. The actuating members are configured to bring and/or keep said supporting arm portions substantially in line with each other while the supporting arms are swung outwards from the collapsed position to the extended position, i.e. the actuating members are actuated when the supporting arms are being extended. As has been explained above, this ensures that the crop-processing device moves through the dead point position and descends into the operating position on account of its own weight after the supporting arms have been extended. Once the crop-processing device has been moved past the dead point position during extension of the supporting arms, the actuating members can be released or de-actuated. In practice, the release of the actuating members is, for example, carried out after the operating position has been reached. In the operating position, the supporting arm portions can pivot freely and substantially unimpeded by the actuating members with respect to each other in order to follow the ground. Therefore, the operation of the agricultural device in the operating position is hardly influenced by the released actuating members, if at all.

In an embodiment according to the invention, an actuating member is arranged between an outer supporting arm portion and an adjacent supporting arm portion of each supporting arm. The expression outer supporting arm portion is understood to mean the supporting arm portion on the free end of the supporting arm which protrudes outwards furthest in the extended position. If the supporting arm portions of the supporting arms do not remain in line during extension of the supporting arms, the outer supporting arm portions tilt forward furthest. The actuating members according to the invention are particularly efficient if they are arranged between the outer supporting arm portions and the adjacent supporting arm portions. This makes it possible to influence the position of the centre of gravity of the crop-processing device relatively significantly.

In this case, it is possible for each supporting arm to comprise a second actuating member which is arranged between two supporting arm portions which are situated between, on one side, the outer supporting arm portion and the adjacent supporting arm portion and, on the other side, the swivel axis of said supporting arm. In this case, each supporting arm comprises two actuating members. The first actuating member is arranged between the outer supporting arm portion and the adjacent supporting arm portion, while the second actuating member is situated further inwards with respect thereto. This is particularly advantageous with a crop-processing device having relatively long supporting arms, for example if the operating width of the crop-processing device is 12.5 metres or more.

In an embodiment according to the invention, the supporting arms can each be positioned between the collapsed position and the extended position thereof by in each case a double-acting hydraulic extension cylinder. The hydraulic extension cylinders are each connected between the tilting frame and the respective supporting arms. The hydraulic extension cylinders are configured to be double-acting, so that the supporting arms can each be moved from the collapsed position to the extended position and back. The hydraulic extension cylinders can be operated in a reliable and simple manner.

According to the invention, the tilting frame can be moved from the lowered position to the raised position by a hydraulic lifting cylinder. According to the invention, the tilting frame descends from the raised position to the lowered position on account of the weight of the crop-processing device, so that the operating position is reached. In order to move the crop-processing device back from the operating position to the transport position, the tilting frame is first raised from the lowered position to the raised position by the hydraulic lifting cylinder. Subsequently, the supporting arms are collapsed into the collapsed position. The crop-processing device is then in the transport position.

The hydraulic lifting cylinder may be configured in different ways. For example, the hydraulic lifting cylinder is single-acting. According to the invention, it is also possible for the hydraulic lifting cylinder to be provided with a piston having a single-acting striker portion and a double-acting striker portion which is smaller than the single-acting striker portion. For example, the single-acting striker portion is smaller than 20% or smaller than 10% or even smaller than 5% of the double-acting striker portion. Such a hydraulic lifting cylinder may be configured as described in NL 1036540 C.

Using a hydraulic lifting cylinder with single-acting/double-acting functionality, it is possible to provide the undercarriage with two supports for supporting the respective supporting arms in the transport position of the crop-processing device, and wherein
the crop-processing device is movable from the transport position to the operating position by:
- raising each of the supporting arms, from the transport position, from the supports by moving the piston of the lifting cylinder in a first direction over the double-acting striker portion, wherein the tilting frame is tilted from the raised position to a raised intermediate position, in which the swivel axes of the supporting arms still run substantially vertically, and
- subsequently swinging each of the supporting arms from the collapsed position to the extended position, and
- thereafter tilting the tilting frame from the raised intermediate position downwards into the lowered position on account of the own weight of the crop-processing device, wherein the piston of the lifting cylinder is carried along in the first direction over the single-acting striker portion, and
the crop-processing device is movable from the operating position to the transport position by:
- tilting the tilting frame upwards until it is in the raised intermediate position by driving the piston of the lifting cylinder in a second direction, counter to the first direction, over the single-acting striker portion, and
- subsequently swinging each of the supporting arms from the extended position to the collapsed position, and
- thereafter lowering each of the supporting arms onto the supports by moving the piston of the lifting cylinder in the second direction over the double-acting striker portion, wherein the tilting frame is tilted from the raised intermediate position into the raised position.

As a result thereof, it is possible to lock the supporting arms safely and reliably in the transport position, while the supporting arms can readily be raised slightly from the transport position and then be expanded in order to move the crop-processing device to the operating position. When the crop-processing device is returned to the transport position, the supporting arms in the collapsed position initially remain suspended slightly over the supports, following which the supporting arms can be laid in a slow and controlled manner on the supports when the piston is moved in the second direction over the small double-acting stroke.

The invention also relates to a method for processing crop which is lying loosely on the ground, for example mowed grass, wherein use is made of an agricultural device which comprises a trailer, which trailer can be coupled to a tractor and is provided with:
- an undercarriage having a central longitudinal axis, which undercarriage is provided with:
   - a coupling member for coupling to a tractor,
   - a plurality of wheels by means of which the undercarriage can travel on the ground,
- a crop-processing device which is provided with:
   - a tilting frame which is connected to the undercarriage so as to be tiltable about a tilting axis which runs substantially transversely with respect to the longitudinal axis of the undercarriage,
   - two supporting arms which extend on either side of the tilting frame, which supporting arms are each connected to the tilting frame so as to be pivotable about a swivel axis which runs substantially transversely with respect to the tilting axis, and which supporting arms each comprise a plurality of supporting arm portions which are connected to each other to as to be hingable about hinge axes which run substantially parallel to the swivel axis of said supporting arm,
   - crop-processing members which are rotatably arranged on the supporting arm portions of the supporting arms,
   wherein the method comprises:
   - moving the crop-processing device from a transport position to an operating position, wherein,
   in the transport position, the tilting frame has a raised position in which the swivel axes of the supporting arms run substantially vertically, and each supporting arm has a collapsed position, in which said supporting arm runs substantially parallel to the longitudinal axis of the undercarriage, and
   when moving the crop-processing device from the transport position to the operating position, swinging each supporting arm outwards about the swivel axis thereof from the collapsed position into an extended position, in which said supporting arm extends outwards substantially transversely with respect to the longitudinal axis of the undercarriage, and subsequently tilting the tilting frame downwards about the tilting axis from the raised position to a lowered position, in which the crop-processing members are oriented for processing crop which is lying loosely on the ground, in which case the operating position has been reached,
   wherein
   each supporting arm is provided with at least one actuating member which is arranged between two adjacent supporting arm portions of said supporting arm which are hingably connected to each other, and said supporting arm portions of each supporting arm are brought and/or kept substantially in line with each other while the supporting arms are being swung outwards from the collapsed position to the extended position, in such a manner that the centre of gravity of the crop-processing device, in the extended position of the supporting arms, viewed in the direction of the longitudinal axis of the undercarriage, is situated behind the tilting axis and the crop-processing device descends into the operating position on account of its own weight.

In this case, it is preferable if each of the actuating members comprises a hydraulic cylinder which is configured, for example, as a single-acting cylinder. The method according to the invention preferably comprises processing the crop which is lying loosely on the ground by the crop-processing members in the operating position of the crop-processing device, wherein each actuating member is configured in such a manner that the hinged connection between the two hingably connected supporting arm portions between which said actuating member is arranged is released by said actuating member in the operating position of the crop-processing device. As a result thereof, the crop-processing members can readily follow the ground during use.

The invention will now be explained in more detail with reference to an exemplary embodiment which is illustrated in the figures.
Figure 1 a shows a top view of an agricultural device according to the invention, wherein the crop-processing device is in the transport position.
Figure 1b shows a top view of the agricultural device illustrated in Figure 1 a, wherein the supporting arms are swung outwards into the extended position, while the tilting frame has not yet been tilted downwards.
Figure 1c shows a top view of the agricultural device illustrated in Figure 1 a, wherein the crop-processing device is in the operating position.
Figure 2a shows a side view of the agricultural device illustrated in Figure 1a, wherein the crop-processing device is in the transport position.
Figure 2b shows a side view of the agricultural device illustrated in Figure 1a, wherein the crop-processing device is in the operating position.
Figure 2c shows a side view of the agricultural device illustrated in Figure 1a, wherein the crop-processing device is in the turning position.
Figure 3a shows a rear view of the agricultural device illustrated in Figure 1a, wherein the crop-processing device is in the transport position.
Figure 3b shows a rear view of the agricultural device illustrated in Figure 1a, wherein the crop-processing device is in the turning position.
Figure 4 shows a cross-sectional view of the hydraulic lifting cylinder of the agricultural device illustrated in Figure 1 a.

The agricultural device for processing crop which is lying loosely on the ground 4, for example mowed grass, is denoted in the figures by reference numeral 1. In this exemplary embodiment, the agricultural device 1 forms a tedder. The tedder 1 comprises a trailer 2 which is provided with an undercarriage 3 and a crop-processing device 8.

At its front end, the undercarriage 3 comprises a drawbar 6 which can be coupled to a tractor (not shown). The undercarriage 3 comprises a central beam which defines a central longitudinal axis 5 of the undercarriage 3. In this exemplary embodiment, the undercarriage 3 comprises two wheels 7 by means of which the trailer 2 is movable on the ground 4. The undercarriage 3 comprises two supports 40 which protrude transversely with respect to the central beam.

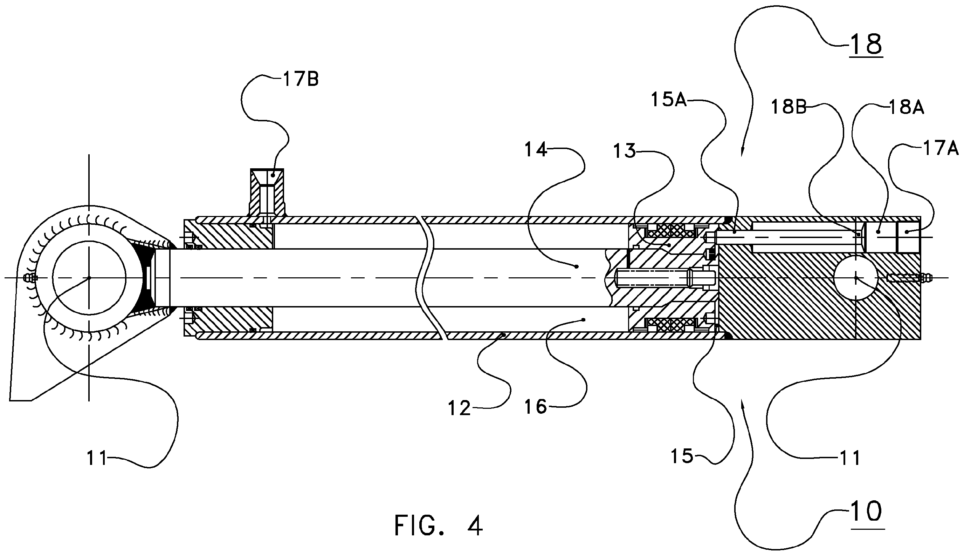

The crop-processing device 8 comprises a tilting frame 9 which is connected to a rear end of the undercarriage 3 so as to be tiltable about a tilting axis 19 which runs substantially transversely with respect to the longitudinal axis 5 of the undercarriage 3. Between the tilting frame 9 and the undercarriage 3, a hydraulic lifting cylinder 10 is arranged, which is shown in more detail in Figure 4.

At the end 11 which is shown on the right-hand side in Figure 4, the hydraulic lifting cylinder 10 is connected to the undercarriage 3. At the opposite end 11, a piston rod 14 of the lifting cylinder 10 is connected to the tilting frame 9. The lifting cylinder 10 comprises a cylinder housing 12, in which a piston 13 is accommodated so as to be able to move in a reciprocating manner. On either side of the piston 13, respective chambers 15, 16 are formed. Via openings 17A, 17B in the cylinder housing 12, hydraulic liquid can be supplied to or discharged from the chambers 15, 16. Piston rod 14 which extends in chamber 16 is attached to the piston 13.

An elongate shut-off body 18 is arranged in the opening 17A which is in fluid communication with the chamber 15. The shut-off body 18 comprises a pin-shaped part 18B and a widened section 18A which is connected thereto. The pin-shaped part 18B is accommodated in a through-opening 15A which opens into the chamber 15. The widened section 18A has a ring-shaped shoulder surface which faces the piston 13.

When hydraulic liquid is supplied to the opening 17A, said liquid leaks past the widened section 18A, and said liquid then flows past the pin-shaped part 18B via the through-opening 15A into the chamber 15. At the same time, the shut-off body 18 moves on account of the hydraulic pressure in the direction towards the piston 13, in Figure 4 to the left, until the ring-shaped shoulder surface of the widened section 18A closes off the through-opening. The piston 13 can then still move further in the direction away from the shut-off body 18, in Figure 4 to the left, as will be explained below.

As long as the through-opening 15A is in fluid communication with the opening 17A, the hydraulic lifting cylinder 10 is double-acting. As soon as the through-opening 15A is closed off by the shut-off body 18, the hydraulic lifting cylinder 10 becomes single-acting. The piston 13 of the hydraulic lifting cylinder 10 illustrated in Figure 4 therefore comprises a single-acting striker portion which is determined by the stroke of the piston 13 which corresponds to the stroke of the shut-off body 18, and a double-acting striker portion which is determined by the remaining stroke of the piston 13 after the through-opening 15A has been closed off by the shut-off body 18. In this exemplary embodiment, the double-acting striker portion is significantly smaller than the single-acting striker portion.

Two supporting arms 20, 21 extend on either side of the tilting frame 9. The supporting arms 20, 21 are each connected to the tilting frame 9 so as to be pivotable about a swivel axis 22, 23 which runs substantially transversely with respect to the tilting axis 19. The supporting arms 20, 21 each comprise a plurality of supporting arm portions 24, 24A which are connected to each other so as to be hingable about hinge axes 25 which run substantially parallel to the swivel axis 22, 23 of the associated supporting arm 20, 21. Hydraulic extension cylinders 32 are arranged between the tilting frame 9 and the supporting arm portions 24 which are connected thereto.

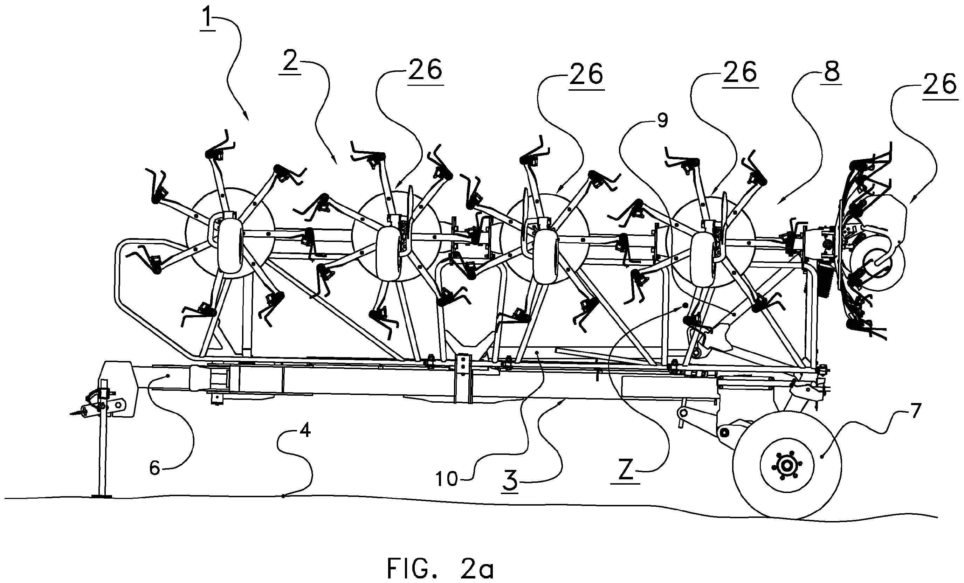

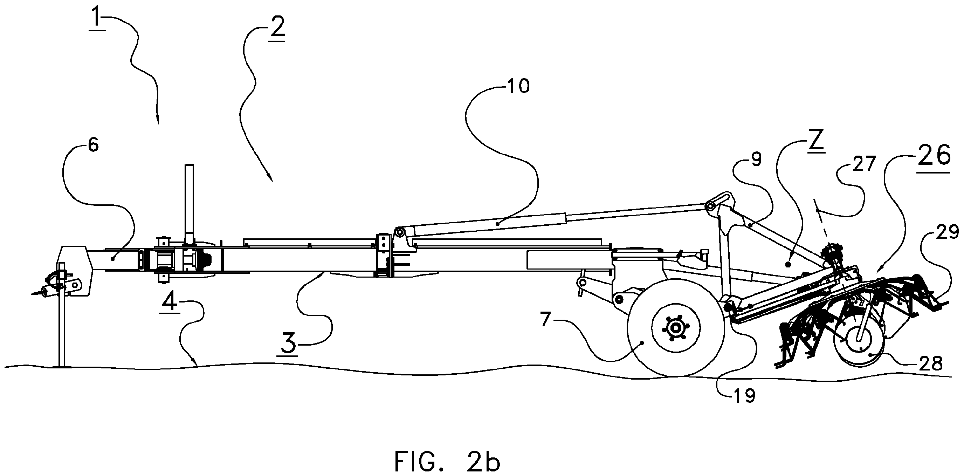

The supporting arm portions 24, 24A are provided with crop-processing members 26 which are rotatable about rotation axes 27 (see Figure 2b). In this exemplary embodiment, two rotatable crop-processing members 26 are also fitted to the tilting frame 9. The crop-processing members 26 have sets of wheels 28 for resting on the ground 4. The crop-processing members 26 each comprise a plurality of teeth 29 in order to process crop which is lying loosely on the ground 4.

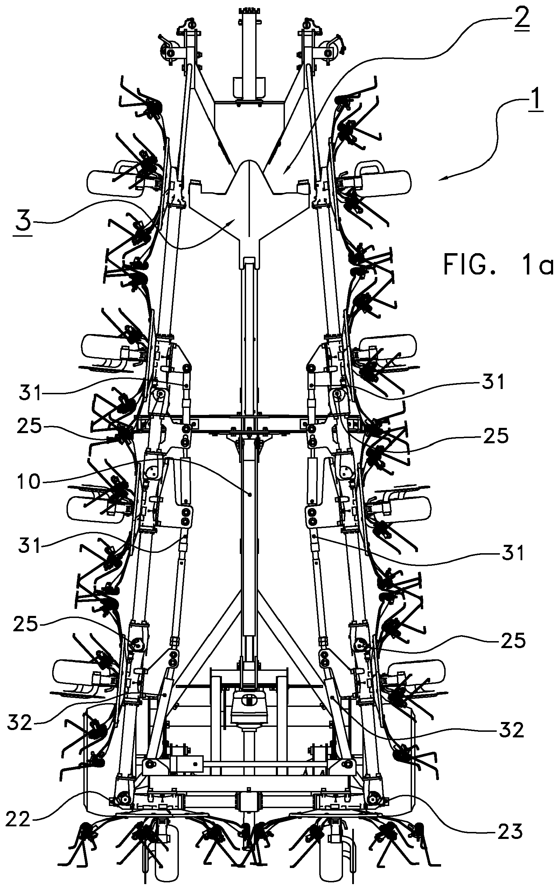

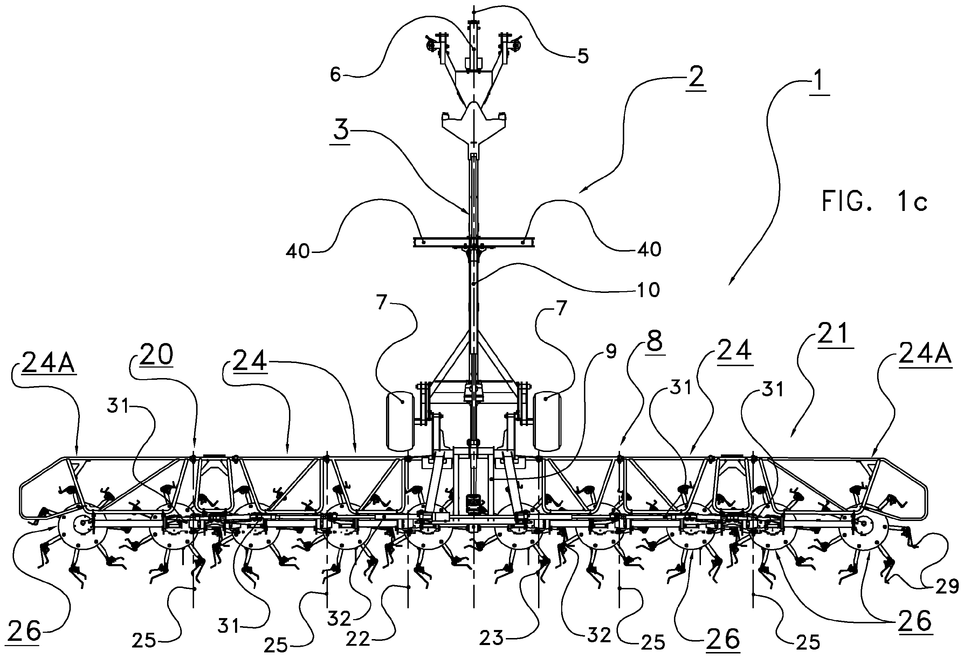

The crop-processing device 8 is movable between a transport position and an operating position, i.e. from the transport position to the operating position and back again. The transport position is illustrated in Figures 1a, 2a, 3a, while the operating position is shown in Figures 1c and 2b. Now, moving the crop-processing device 8 between the transport position and the operating position according to the invention will be described.

In the transport position, each supporting arm 20, 21 is in a collapsed position, in which said supporting arm 20, 21 runs substantially parallel to the longitudinal axis 5 of the undercarriage 3. In this case, the supporting arms 20, 21 are accommodated in the supports 40. In the transport position, the tilting frame 9 has a raised position, in which the swivel axes 22, 23 of the supporting arms 20, 21 run substantially vertical. In the transport position, the agricultural device 1 can be driven on public roads using a tractor.

Each of the supporting arms 20, 21 is raised from the supports 40 out of the transport position over a small height by supplying hydraulic liquid via a line (not shown) to the opening 17A of the lifting cylinder 10. As a result of the hydraulic pressure, the piston 13 in Figure 4 moves to the left until the shut-off body 18 closes off the through-opening to the chamber 15. The piston 13 is thus moved over the distance which corresponds to the double-acting striker portion. As a result thereof, the tilting frame 9 is tilted through a small angle from the raised position to a raised intermediate position, in which the swivel axes 22, 23 of the supporting arms 20, 21 still run substantially vertical.

Subsequently, the line to the opening 17A is closed, after which each of the supporting arms 20, 21 is extended from the collapsed position about the swivel axes 22, 23 until they reach an extended position by means of the extension cylinders 32. In the extended position of the supporting arms 20, 21, said supporting arms 20, 21 extend outwards substantially transversely with respect to the longitudinal axis 5 of the undercarriage 3.

In this exemplary embodiment, each supporting arm 20, 21 comprises two hydraulic pressure cylinders 31 which are each arranged between two adjacent supporting arm portions 24, 24A of said supporting arm 20, 21 which are hingably connected to each other. The first pressure cylinder 31 is arranged between an outer supporting arm portion 24A and an adjacent supporting arm portion 24 of each supporting arm 20, 21. The second pressure cylinder 31 is connected between two other supporting arm portions 24 which are situated further inwards. According to the invention, it is also possible to use different actuating members instead of hydraulic pressure cylinders.

The pressure cylinders 31 are configured to bring and/or keep the supporting arm portions 24, 24A of each supporting arm 20, 21 substantially in line with each other when the supporting arms 20, 21 are being swung outwards from the collapsed position to the extended position. Due to the fact that the pressure cylinders 31 prevent the supporting arm portions 24, 24A from remaining in a forwardly tilted position, it is ensured that the centre of gravity Z of the crop-processing device 8, viewed in the direction of the longitudinal axis 5 of the undercarriage 3, moves from a position in front of the tilting axis 19, past the tilting axis 19 to a position behind the tilting axis 19. In other words, in the extended position of the supporting arms 20, 21, the centre of gravity Z of the crop-processing device 8, viewed in the direction of the longitudinal axis 5 of the undercarriage 3, is situated behind the tilting axis 19.

This means that the crop-processing device 8 moves down on account of its own weight when the supporting arms 20, 21 are being extended. In this case, the piston 13 of the lifting cylinder 10 is carried along - the piston 13 in Figure 4 is consequently moved further to the left over a distance corresponding to the single-acting striker portion. Since the line to the opening 17A still remains closed, the chamber 15 will be evacuated. On account of the own weight of the crop-processing device 8, the tilting frame 9 therefore moves from the raised intermediate position to a lowered position, thus reaching the operating position.

In the operating position, the crop-processing members 26 are arranged for processing the crop which is lying loosely on the ground 4. In this case, the pressure cylinders 31 are opened, so that the supporting arm portions 24, 24A can pivot freely with respect to each other and substantially unimpeded by the pressure cylinders 31. As a result thereof, the crop-processing members 26 can follow the ground 4 well in the operating position.

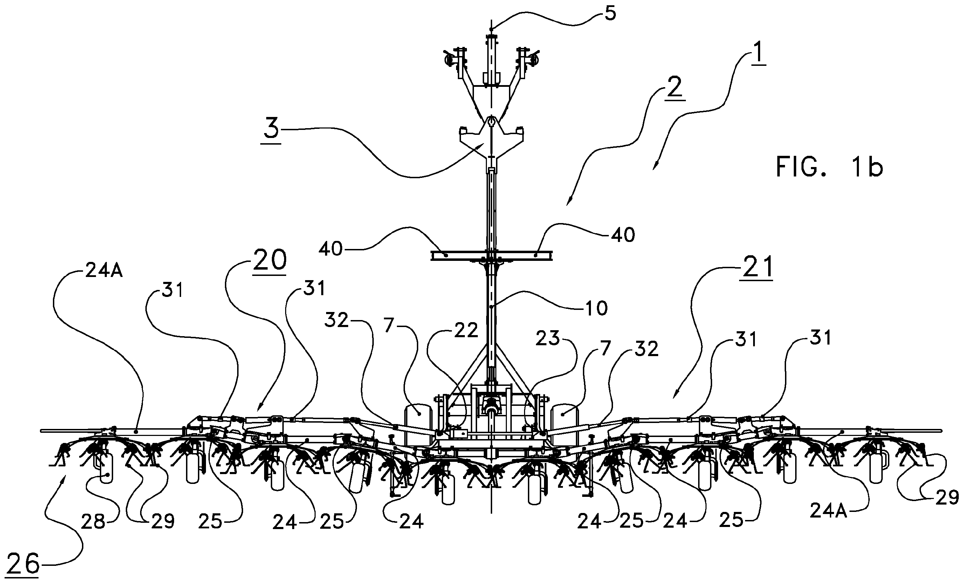

In order to move the crop-processing device 8 back to the transport position from the operating position, the hydraulic lifting cylinder 10 is first operated. Via the opening 17B, hydraulic liquid is supplied to the chamber 16 (see Figure 4), so that the piston 13 of the lifting cylinder 10 in Figure 1 moves to the right over the distance which corresponds to the single-acting striker portion. In this case, the vacuum in the chamber 15 is released. Since the line to the opening 17A is still closed, the piston 13 cannot move further than the single-acting striker portion. In this case, the hydraulic liquid present in the chamber 15 is compressed between the piston 13 and the shut-off body 18 which closes off the through-opening 15A. From the lowered position, the tilting frame 9 therefore tilts upwards and back into the raised intermediate position.

Subsequently, each of the supporting arms 20, 21 is swung from the extended position to the collapsed position by means of the extension cylinders 32. Only then is the line to the opening 17A opened, so that the hydraulic liquid can flow out of the chamber 15. As a result thereof, the piston 13 of the lifting cylinder 10 can move further, in Figure 4 towards the right, over the distance which corresponds to the double-acting striker portion. In this case, the tilting frame 9 tilts from the raised intermediate position to the raised position, so that the supporting arms 20, 21 are lowered together onto the supports 40 relatively slowly. In this way, the transport position is reached again.

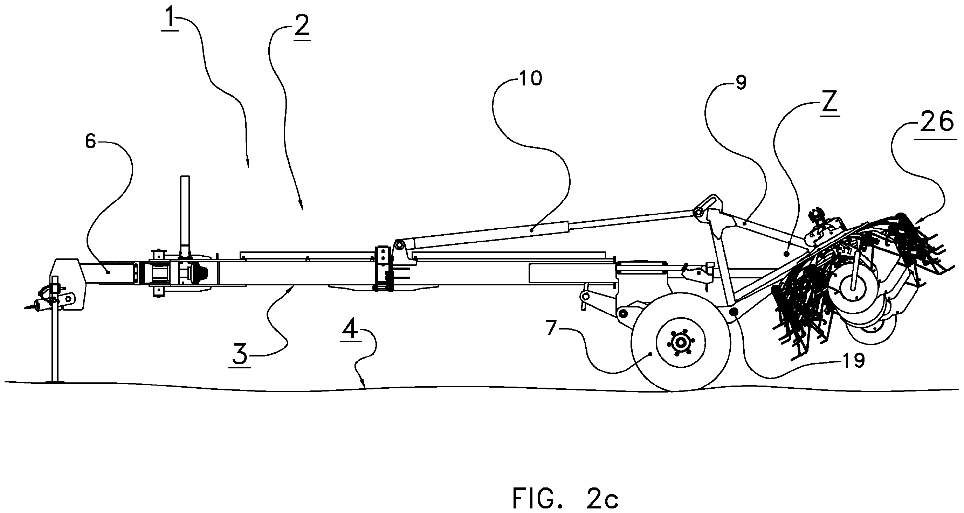

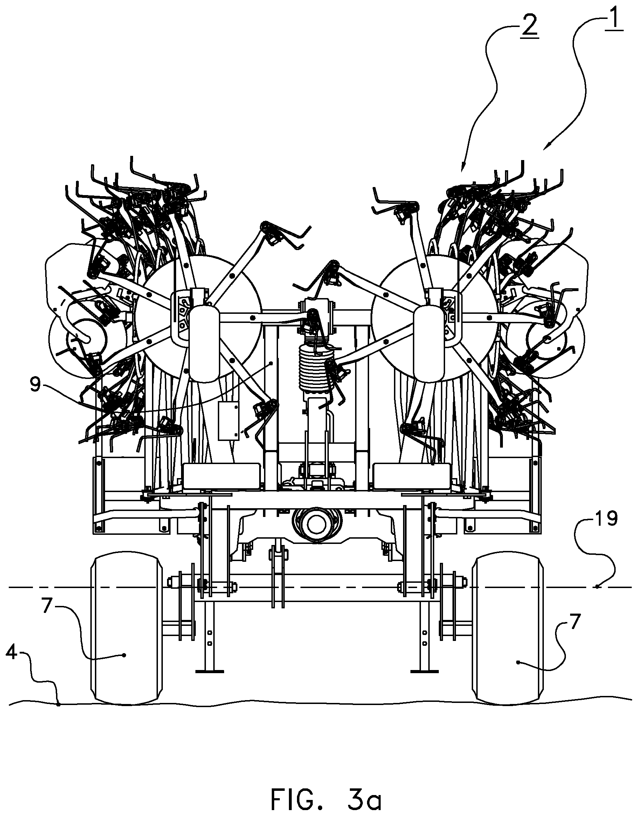

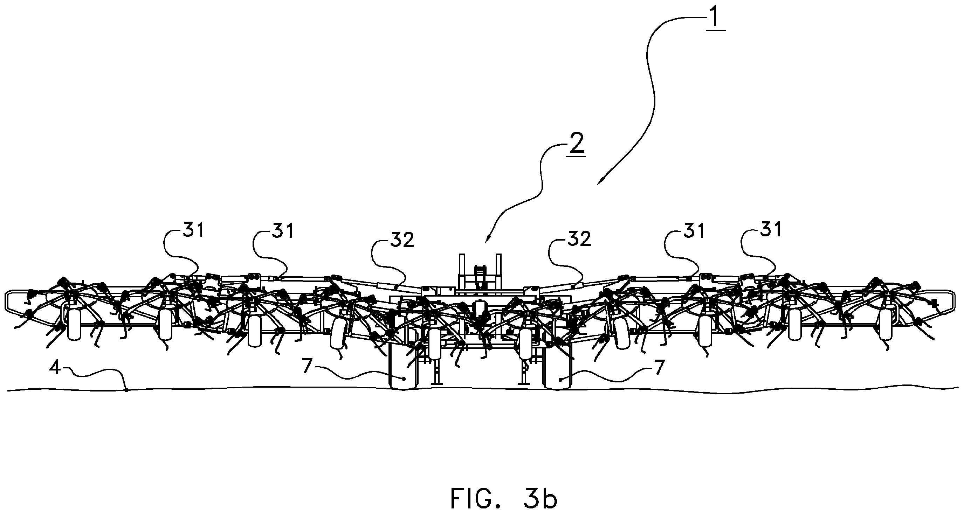

As is illustrated in Figures 2c and 3b, the crop-processing device 8 can also be moved to a turning position by operating the hydraulic lifting cylinder 10. The turning position is situated between the transport position and the operating position.

The invention is not limited to the exemplary embodiment illustrated in the figures. The person skilled in the art may carry out various modifications. The scope of the invention is defined by the appended claims.

## Claims

1. Agricultural device for processing crop which lies loosely on the ground (4), for example mowed grass, which agricultural device (1) comprises a trailer (2) which can be coupled to a tractor, which trailer (2) is provided with:
- an undercarriage (3) having a central longitudinal axis (5), which undercarriage (3) is provided with:
• a coupling member (6) for coupling to a tractor,
• a plurality of wheels (7) by means of which the undercarriage (3) can travel on the ground (4),
- a crop-processing device (8) which is provided with:
• a tilting frame (9) which is connected to the undercarriage (3) so as to be tiltable about a tilting axis (19) which runs substantially transversely with respect to the longitudinal axis (5) of the undercarriage (3),
• two supporting arms (20, 21) which extend on either side of the tilting frame (9), which supporting arms (20, 21) are each connected to the tilting frame (9) so as to be pivotable about a swivel axis (22, 23) which runs substantially transversely with respect to the tilting axis (19), and which supporting arms (20, 21) each comprise a plurality of supporting arm portions (24, 24A) which are connected to each other so as to be hingable about hinge axes (25) which run substantially parallel to the swivel axis (22, 23) of said supporting arm (20, 21),
• crop-processing members (26) which are fitted to the supporting arm portions (24, 24A) of the supporting arms (20, 21) so as to be rotatable,
wherein the crop-processing device (8) is movable from a transport position to an operating position, wherein,
in the transport position, the tilting frame (9) has a raised position in which the swivel axes (22, 23) of the supporting arms (20, 21) run substantially vertically, and each supporting arm (20, 21) has a collapsed position, in which said supporting arm (20, 21) runs substantially parallel to the longitudinal axis (5) of the undercarriage (3), and
when moving the crop-processing device from the transport position to the operating position, each supporting arm (20, 21) is swung outwards about the swivel axis (22, 23) thereof, from the collapsed position into an extended position, in which said supporting arm (20, 21) extends outwards substantially transversely with respect to the longitudinal axis (5) of the undercarriage (3), and subsequently the tilting frame (9) is tilted downwards about the tilting axis (19), from the raised position to a lowered position, in which the crop-processing members (26) are oriented for processing crop which is lying loosely on the ground (4), in which case the operating position has been reached,
**characterized in that**
each supporting arm (20, 21) is provided with at least one actuating member (31) which is arranged between two adjacent supporting arm portions (24, 24A) of said supporting arm (20, 21) which are hingably connected to each other and the actuating members (31) are configured to bring and/or keep said supporting arm portions (24, 24A) of each supporting arm (20, 21) substantially in line with each other while the supporting arms (20, 21) are being swung outwards from the collapsed position to the extended position, in such a manner that the centre of gravity (Z) of the crop-processing device (8), in the extended position of the supporting arms (20, 21), viewed in the direction of the longitudinal axis (5) of the undercarriage (3), is situated behind the tilting axis (19) and the crop-processing device (8) descends into the operating position on account of its own weight.

2. Agricultural device according to Claim 1, wherein the actuating members each comprise a hydraulic cylinder (31).

3. Agricultural device according to Claim 2, wherein the hydraulic cylinders (31) are each single-acting.

4. Agricultural device according to one of the preceding claims, wherein each actuating member (31) is configured in such a manner that the hinged connection between the two hingably connected supporting arm portions (24, 24A) between which said actuating member (31) is arranged is releasable by said actuating member (31) in the operating position of the crop-processing device (8).

5. Agricultural device according to one of the preceding claims, wherein an actuating member (31) is arranged between an outer supporting arm portion (24A) and an adjacent supporting arm portion (24) of each supporting arm (20, 21).

6. Agricultural device according to Claim 5, wherein each supporting arm (20, 21) comprises a second actuating member (31) which is arranged between two supporting arm portions (24) which are situated between, on one side, the outer supporting arm portion (24A) and the adjacent supporting arm portion (24) and, on the other side, the swivel axis (22, 23) of said supporting arm (20, 21).

7. Agricultural device according to one of the preceding claims, wherein the supporting arms (20, 21) can each be positioned between the collapsed position and the extended position thereof by in each case a double-acting hydraulic extension cylinder (32).

8. Agricultural device according to one of the preceding claims, wherein the tilting frame (9) can be moved from the lowered position to the raised position by a hydraulic lifting cylinder (10).

9. Agricultural device according to Claim 8, wherein the hydraulic lifting cylinder (10) is single-acting.

10. Agricultural device according to Claim 8, wherein the hydraulic lifting cylinder (10) is provided with a piston (13) having a single-acting striker portion and a double-acting striker portion which is smaller than the single-acting striker portion, and wherein the undercarriage (3) is provided with two supports (40) for supporting the respective supporting arms (20, 21) in the transport position of the crop-processing device (8), and wherein
the crop-processing device (8) is movable from the transport position to the operating position by:
• raising each of the supporting arms (20, 21), from the transport position, from the supports (40) by operating the piston (13) of the lifting cylinder (10) in a first direction over the double-acting striker portion, wherein the tilting frame (9) is tilted from the raised position to a raised intermediate position, in which the swivel axes (22, 23) of the supporting arms (20, 21) still run substantially vertically, and
• subsequently swinging each of the supporting arms (20, 21) from the collapsed position to the extended position, and
• thereafter tilting the tilting frame (9) from the raised intermediate position downwards into the lowered position on account of the own weight of the crop-processing device (8), wherein the piston (13) of the lifting cylinder (10) is carried along in the first direction over the single-acting striker portion, and
the crop-processing device (8) is movable from the operating position to the transport position by:
• tilting the tilting frame (9) upwards until it is in the raised intermediate position by operating the piston (13) of the lifting cylinder (10) in a second direction, counter to the first direction, over the single-acting striker portion, and
• subsequently swinging each of the supporting arms (20, 21) from the extended position to the collapsed position, and
• thereafter lowering each of the supporting arms (20, 21) onto the supports (40) by moving the piston (13) of the lifting cylinder (10) in the second direction over the double-acting striker portion, wherein the tilting frame (9) is tilted from the raised intermediate position into the raised position.

11. Agricultural machine according to one of the preceding claims, wherein the agricultural machine is a tedder.

12. Agricultural device according to one of the preceding claims, comprising a tractor, wherein the trailer can be coupled to the tractor.

13. Method for processing crop which is lying loosely on the ground, for example mowed grass, wherein use is made of an agricultural device (1) which comprises a trailer (2), which trailer (2) can be coupled to a tractor and is provided with:
- an undercarriage (3) having a central longitudinal axis (5), which undercarriage (3) is provided with:
• a coupling member (6) for coupling to a tractor,
• a plurality of wheels (7) by means of which the undercarriage (3) can travel on the ground (4),
- a crop-processing device (8) which is provided with:
• a tilting frame (9) which is connected to the undercarriage (3) so as to be tiltable about a tilting axis (19) which runs substantially transversely with respect to the longitudinal axis (5) of the undercarriage (3),
• two supporting arms (20, 21) which extend on either side of the tilting frame (9), which supporting arms (20, 21) are each connected to the tilting frame (9) so as to be pivotable about a swivel axis (22, 23) which runs substantially transversely with respect to the tilting axis (19), and which supporting arms (20, 21) each comprise a plurality of supporting arm portions (24, 24A) which are connected to each other to as to be hingable about hinge axes (25) which run substantially parallel to the swivel axis (22, 23) of said supporting arm (20, 21),
• crop-processing members (26) which are rotatably arranged on the supporting arm portions (24, 24A) of the supporting arms (20, 21),
wherein the method comprises:
- moving the crop-processing device (8) from a transport position to an operating position, wherein,
in the transport position, the tilting frame (9) has a raised position in which the swivel axes (22, 23) of the supporting arms (20, 21) run substantially vertically, and each supporting arm (20, 21) has a collapsed position, in which said supporting arm (20, 21) runs substantially parallel to the longitudinal axis (5) of the undercarriage (3), and
when moving the crop-processing device from the transport position to the operating position, swinging each supporting arm (20, 21) outwards about the swivel axis (22, 23) thereof from the collapsed position into an extended position, in which said supporting arm (20, 21) extends outwards substantially transversely with respect to the longitudinal axis (5) of the undercarriage (3), and subsequently tilting the tilting frame (9) downwards about the tilting axis (19) from the raised position to a lowered position, in which the crop-processing members (26) are oriented for processing crop which is lying loosely on the ground (4), in which case the operating position has been reached,
**characterized in that**
each supporting arm (20, 21) is provided with at least one actuating member (31) which is arranged between two adjacent supporting arm portions (24, 24A) of said supporting arm (20, 21) which are hingably connected to each other, and said supporting arm portions (24, 24A) of each supporting arm (20, 21) are brought and/or kept substantially in line with each other while the supporting arms (20, 21) are being swung outwards from the collapsed position to the extended position, in such a manner that the centre of gravity (Z) of the crop-processing device (8), in the extended position of the supporting arms (20, 21), viewed in the direction of the longitudinal axis (5) of the undercarriage (3), is situated behind the tilting axis (19) and the crop-processing device (8) descends into the operating position on account of its own weight.

14. Method according to Claim 13, wherein the actuating members each comprise a hydraulic cylinder (31).

15. Method according to Claim 14, wherein the hydraulic cylinders (31) are each single-acting.

16. Method according to one of Claims 13-15, comprising processing the crop which is lying loosely on the ground (4) by the crop-processing members (26) in the operating position of the crop-processing device (8), wherein each actuating member (31) is configured in such a manner that the hinged connection between the two hingably connected supporting arm portions (24, 24A) between which said actuating member (31) is arranged is released by said actuating member (31) in the operating position of the crop-processing device (8).

## Patentansprüche

1. Landwirtschaftliches Gerät für die Bearbeitung von lose auf dem Boden (4) liegendem Erntegut, beispielsweise gemähtem Gras, wobei das landwirtschaftliche Gerät (1) einen Anhänger (2) umfasst, der mit einem Schlepper gekoppelt werden kann, wobei der Anhänger (2) mit Folgendem versehen ist:
- einem Fahrgestell (3) mit einer zentralen Längsachse (5), wobei das Fahrgestell (3) mit Folgendem versehen ist:
- einem Kopplungselement (6) zum Koppeln mit einem Schlepper,
- einer Mehrzahl an Rädern (7) mittels derer das Fahrgestell (3) sich auf dem Boden (4) bewegen kann,
- einer Erntegut-Bearbeitungsvorrichtung (8), die mit Folgendem versehen ist:
- einem neigbaren Rahmen (9), der mit dem Fahrgestell (3) derart verbunden ist, dass er um eine Neigungsachse (19), die im Wesentlichen quer zur Längsachse (5) des Fahrgestells (3) verläuft, geneigt werden kann,
- zwei Tragarmen (20, 21), die sich auf jeder Seite des neigbaren Rahmens (9) erstrecken, wobei die Tragarme (20, 21) jeweils mit dem neigbaren Rahmen (9) derart verbunden sind, dass sie um eine Schwenkachse (22, 23), die im Wesentlichen quer zur Neigungsachse (19) verläuft, schwenkbar sind und wobei die Tragarme (20, 21) jeweils eine Mehrzahl an Tragarmabschnitten (24, 24A) umfassen, die miteinander derart verbunden sind, dass sie um Klappachsen (25), die im Wesentlichen parallel zur Schwenkachse (22, 23) des Tragarms (20, 21) verlaufen, klappbar sind,
- Erntegut-Bearbeitungselementen (26), die an den Tragarmabschnitten (24, 24A) der Tragarme (20, 21) derart angebracht sind, dass sie rotierbar sind,
wobei die Erntegut-Bearbeitungsvorrichtung (8) aus einer Transportposition in eine Betriebsposition bewegbar ist, wobei
der neigbare Rahmen (9) in der Transportposition eine erhöhte Position aufweist, in der die Schwenkachsen (22, 23) der Tragarme (20, 21) im Wesentlichen vertikal verlaufen und jeder Tragarm (20, 21) eine Einklappposition aufweist, in der der Tragarm (20, 21) im Wesentlichen parallel zur Längsachse (5) des Fahrgestells (3) verläuft, und
jeder Tragarm (20, 21) beim Bewegen der Erntegut-Bearbeitungsvorrichtung aus der Transportposition in die Betriebsposition um seine Schwenkachse (22, 23) aus der Einklappposition in eine Ausklappposition, in der sich der Tragarm (20, 21) im Wesentlichen quer zur Längsachse (5) des Fahrgestells (3) auswärts erstreckt, auswärts geschwungen wird, und anschließend der neigbare Rahmen (9) um die Neigungsachse (19) aus der erhöhten Position in eine abgesenkte Position, in der die Erntegut-Bearbeitungselemente (26) zum Bearbeiten von lose auf dem Boden (4) liegendem Erntegut ausgerichtet sind, abwärts geneigt wird, womit die Betriebsposition erreicht ist,
**dadurch gekennzeichnet, dass**
jeder Tragarm (20, 21) mit wenigstens einem Betätigungselement (31), das zwischen zwei aneinander angrenzenden Tragarmabschnitten (24, 24A) des Tragarms (20, 21), die gelenkig miteinander verbunden sind, angeordnet ist, versehen ist, und die Betätigungselemente (31) ausgelegt sind, um die Tragarmabschnitte (24, 24A) jedes Tragarms (20, 21) im Wesentlichen zueinander in eine Linie zu bringen und/oder auf einer Linie zu halten, während die Tragarme (20, 21) von der Einklappposition in die Ausklappposition auswärts geschwungen werden, so dass der Schwerpunkt (Z) der Erntegut-Bearbeitungsvorrichtung (8) in der Ausklappposition der Tragarme (20, 21) in der Perspektive in Richtung der Längsachse (5) des Fahrgestells (3) hinter der Neigungsachse (19) liegt und die Erntegut-Bearbeitungsvorrichtung (8) sich durch ihr Eigengewicht in die Betriebsposition absenkt.

2. Landwirtschaftliches Gerät nach dem Anspruch 1, wobei die Betätigungselemente jeweils einen Hydraulikzylinder (31) umfassen.

3. Landwirtschaftliches Gerät nach dem Anspruch 2, wobei die Hydraulikzylinder (31) jeweils einfachwirkend sind.

4. Landwirtschaftliches Gerät nach einem der vorstehenden Ansprüche, wobei jedes Betätigungselement (31) derart ausgelegt ist, dass die Gelenkverbindung zwischen den zwei gelenkig miteinander verbundenen Tragarmabschnitten (24, 24A), zwischen denen das Betätigungselement (31) angeordnet ist, in der Betriebsposition der Erntegut-Bearbeitungsvorrichtung (8) durch das Betätigungselement (31) lösbar ist.

5. Landwirtschaftliches Gerät nach einem der vorstehenden Ansprüche, wobei ein Betätigungselement (31) zwischen einem äußeren Tragarmabschnitt (24A) und einem angrenzenden Tragarmabschnitt (24) jedes Tragarms (20, 21) angeordnet ist.

6. Landwirtschaftliches Gerät nach dem Anspruch 5, wobei jeder Tragarm (20, 21) ein zweites Betätigungselement (31) umfasst, das zwischen zwei Tragarmabschnitten (24), die zwischen dem äußeren Tragarmabschnitt (24A) und dem angrenzenden Tragarmabschnitt (24) auf einer Seite und der Schwenkachse (22, 23) des Tragarms (20, 21) auf der anderen Seite platziert sind, angeordnet ist.

7. Landwirtschaftliches Gerät nach einem der vorstehenden Ansprüche, wobei die Tragarme (20, 21) jeweils zwischen der Einklappposition und ihrer Ausklappposition jeweils durch einen doppeltwirkenden hydraulischen Ausklappzylinder (32) platziert werden können.

8. Landwirtschaftliches Gerät nach einem der vorstehenden Ansprüche, wobei der neigbare Rahmen (9) durch einen hydraulischen Hubzylinder (10) von der abgesenkten Position in die erhöhte Position bewegt werden kann.

9. Landwirtschaftliches Gerät nach dem Anspruch 8, wobei der hydraulische Hubzylinder (10) einfachwirkend ist.

10. Landwirtschaftliches Gerät nach dem Anspruch 8, wobei der hydraulische Hubzylinder (10) mit einem Kolben (13) mit einem einfachwirkenden Schlagabschnitt und einem doppeltwirkenden Schlagabschnitt, der kleiner als der einfachwirkende Schlagabschnitt ist, versehen ist und wobei das Fahrgestell (3) mit zwei Stützen (40) zum Stützen des jeweiligen Tragarms (20, 21) in der Transportposition der Erntegut-Bearbeitungsvorrichtung (8) versehen ist, und wobei
die Erntegut-Bearbeitungsvorrichtung (8) aus der Transportposition in die Betriebsposition durch Folgendes bewegbar ist:
- Anheben jedes Tragarms (20, 21) aus der Transportposition von den Stützen (40) durch Betätigen des Kolbens (13) des Hubzylinders (10) in einer ersten Richtung über den doppeltwirkenden Schlagabschnitt, wobei der neigbare Rahmen (9) aus der erhöhten Position in eine erhöhte Zwischenposition, in der die Schwenkachsen (22, 23) der Tragarme (20, 21) nach wie vor im Wesentlichen vertikal verlaufen, geneigt wird, und
- anschließendes Schwenken jedes Tragarms (20, 21) aus der Einklappposition in die Ausklappposition, und
- anschließendes Abwärtsneigen des neigbaren Rahmens (9) aus der erhöhten Zwischenposition in die abgesenkte Position durch das Eigengewicht der Erntegut-Bearbeitungsvorrichtung (8), wobei der Kolben (13) des Hubzylinders (10) entlang der ersten Richtung über den einfachwirkenden Schlagabschnitt mitgeführt wird, und
wobei die Erntegut-Bearbeitungsvorrichtung (8) aus der Betriebsposition in die Transportposition durch Folgendes bewegbar ist:
- Aufwärtsneigen des neigbaren Rahmens (9) durch Betätigen des Kolbens (13) des Hubzylinders (10) in einer der ersten Richtung entgegengesetzten zweiten Richtung über den einfachwirkenden Schlagabschnitt, bis er sich in der erhöhten Zwischenposition befindet, und
- anschließendes Schwenken jedes Tragarms (20, 21) aus der Ausklappposition in die Einklappposition, und
- anschließendes Absenken jedes Tragarms (20, 21) auf die Stützen (40) durch Bewegen des Kolbens (13) des Hubzylinders (10) in der zweiten Richtung über den doppeltwirkenden Schlagabschnitt, wobei der neigbare Rahmen (9) aus der erhöhten Zwischenposition in die erhöhte Position geneigt wird.

11. Landwirtschaftsmaschine nach einem der vorstehenden Ansprüche, wobei die Landwirtschaftsmaschine ein Zettwender ist.

12. Landwirtschaftliches Gerät nach einem der vorstehenden Ansprüche, das einen Schlepper umfasst, wobei der Anhänger mit dem Schlepper gekoppelt werden kann.

13. Verfahren zum Bearbeiten von lose auf dem Boden liegendem Erntegut, beispielsweise gemähtem Gras, wobei ein landwirtschaftliches Gerät (1) verwendet wird, das einen Anhänger (2) umfasst, der mit einem Schlepper gekoppelt werden kann und mit Folgendem versehen ist:
- einem Fahrgestell (3) mit einer zentralen Längsachse (5), wobei das Fahrgestell (3) mit Folgendem versehen ist:
- einem Kopplungselement (6) zum Koppeln mit einem Schlepper,
- einer Mehrzahl an Rädern (7), mittels derer das Fahrgestell (3) sich auf dem Boden (4) bewegen kann,
- einer Erntegut-Bearbeitungsvorrichtung (8), die mit Folgendem versehen ist:
- einem neigbaren Rahmen (9), der mit dem Fahrgestell (3) derart verbunden ist, dass er um eine Neigungsachse (19), die im Wesentlichen quer zur Längsachse (5) des Fahrgestells (3) verläuft, geneigt werden kann,
- zwei Tragarmen (20, 21), die sich auf jeder Seite des neigbaren Rahmens (9) erstrecken, wobei die Tragarme (20, 21) jeweils mit dem neigbaren Rahmen (9) derart verbunden sind, dass sie um eine Schwenkachse (22, 23), die im Wesentlichen quer zur Neigungsachse (19) verläuft, schwenkbar sind und wobei die Tragarme (20, 21) jeweils eine Mehrzahl an Tragarmabschnitten (24, 24A) umfassen, die miteinander derart verbunden sind, dass sie um Klappachsen (25), die im Wesentlichen parallel zur Schwenkachse (22, 23) des Tragarms (20, 21) verlaufen, klappbar sind,
- Erntegut-Bearbeitungselementen (26), die an den Tragarmabschnitten (24, 24A) der Tragarme (20, 21) rotierbar angeordnet sind,
wobei das Verfahren Folgendes umfasst:
- Bewegen der Erntegut-Bearbeitungsvorrichtung (8) aus einer Transportposition in eine Betriebsposition, wobei
der neigbare Rahmen (9) in der Transportposition eine erhöhte Position aufweist, in der die Schwenkachsen (22, 23) der Tragarme (20, 21) im Wesentlichen vertikal verlaufen und jeder Tragarm (20, 21) eine Einklappposition aufweist, in der der Tragarm (20, 21) im Wesentlichen parallel zur Längsachse (5) des Fahrgestells (3) verläuft, und Auswärtsschwingen jedes Tragarms (20, 21) beim Bewegen der Erntegut-Bearbeitungsvorrichtung aus der Transportposition in die Betriebsposition um seine Schwenkachse (22, 23) aus der Einklappposition in eine Ausklappposition, in der sich der Tragarm (20, 21) im Wesentlichen quer zur Längsachse (5) des Fahrgestells (3) auswärts erstreckt, und anschließendes Abwärtsneigen des neigbaren Rahmens (9) um die Neigungsachse (19) aus der erhöhten Position in eine abgesenkte Position, in der die Erntegut-Bearbeitungselemente (26) zum Bearbeiten von lose auf dem Boden (4) liegendem Erntegut ausgerichtet sind, womit die Betriebsposition erreicht ist,
**dadurch gekennzeichnet, dass**
jeder Tragarm (20, 21) mit wenigstens einem Betätigungselement (31), das zwischen zwei aneinander angrenzenden Tragarmabschnitten (24, 24A) des Tragarms (20, 21), die gelenkig miteinander verbunden sind, angeordnet ist, versehen ist, und die Tragarmabschnitte (24, 24A) jedes Tragarms (20, 21) im Wesentlichen zueinander in eine Linie gebracht und/oder auf einer Linie gehalten werden, während die Tragarme (20, 21) von der Einklappposition in die Ausklappposition auswärts geschwungen werden, so dass der Schwerpunkt (Z) der Erntegut-Bearbeitungsvorrichtung (8) in der Ausklappposition der Tragarme (20, 21) in der Perspektive in Richtung der Längsachse (5) des Fahrgestells (3) hinter der Neigungsachse (19) liegt und die Erntegut-Bearbeitungsvorrichtung (8) sich durch ihr Eigengewicht in die Betriebsposition absenkt.

14. Verfahren nach dem Anspruch 13, wobei die Betätigungselemente jeweils einen Hydraulikzylinder (31) umfassen.

15. Verfahren nach dem Anspruch 14, wobei die Hydraulikzylinder (31) jeweils einfachwirkend sind.

16. Verfahren nach einem der Ansprüche 13-15, das das Bearbeiten des lose auf dem Boden (4) liegenden Ernteguts durch die Erntegut-Bearbeitungselemente (26) in der Betriebsposition der Erntegut-Bearbeitungsvorrichtung (8) umfasst, wobei jedes Betätigungselement (31) in derart ausgelegt ist, dass die Gelenkverbindung zwischen den zwei gelenkig miteinander verbundenen Tragarmabschnitten (24, 24A), zwischen denen das Betätigungselement (31) angeordnet ist, in der Betriebsposition der Erntegut-Bearbeitungsvorrichtung (8) durch das Betätigungselement (31) gelöst wird.

## Revendications

1. Dispositif agricole pour traiter une récolte qui se trouve en vrac sur le sol (4), par exemple de l'herbe fauchée, lequel dispositif agricole (1) comprend une remorque (2) qui peut être attelée à un tracteur, laquelle remorque (2) est pourvue de:
- un train roulant (3) ayant un axe longitudinal central (5), lequel train roulant (3) est pourvu de:
- un élément d'attelage (6) pour l'atteler à un tracteur,
- une pluralité de roues (7) au moyen desquelles le train roulant (3) peut se déplacer sur le sol (4),
- un dispositif (8) de traitement de récolte qui est pourvu de :
- un cadre basculant (9) qui est raccordé au train roulant (3) de façon à pouvoir basculer autour d'un axe de basculement (19) qui est sensiblement transversal par rapport à l'axe longitudinal (5) du train roulant (3),
- deux bras-supports (20, 21) qui s'étendent de part et d'autre du cadre basculant (9), lesquels bras-supports (20, 21) sont chacun raccordés au cadre basculant (9) de façon à pouvoir pivoter autour d'un axe de pivotement (22, 23) qui est sensiblement transversal par rapport à l'axe de basculement (19), et lesquels bras-supports (20, 21) comprennent chacun une pluralité de parties (24, 24A) de bras-support qui sont raccordées l'une à l'autre de façon à pouvoir s'articuler autour d'axes charnières (25) qui sont sensiblement parallèles à l'axe de pivotement (22, 23) dudit bras-support (20, 21),
- des éléments (26) de traitement de récolte qui sont montés sur les parties (24, 24A) de bras-support des bras-supports (20, 21) de façon à pouvoir tourner,
dans lequel le dispositif (8) de traitement de récolte peut se déplacer d'une position de transport à une position de fonctionnement,
dans lequel, en position de transport, le cadre basculant (9) présente une position relevée dans laquelle les axes de pivotement (22, 23) des bras-supports (20, 21) sont sensiblement verticaux, et chaque bras-support (20, 21) présente une position pliée, dans laquelle ledit bras-support (20, 21) est sensiblement parallèle à l'axe longitudinal (5) du train roulant (3), et
quand on déplace le dispositif de traitement de récolte de la position de transport à la position de fonctionnement, chaque bras-support (20, 21) est balancé vers l'extérieur autour de son axe de pivotement (22, 23), de la position pliée à une position déployée, dans lequel ledit bras-support (20, 21) se déploie vers l'extérieur sensiblement transversalement par rapport à l'axe longitudinal (5) du train roulant (3), et par la suite le cadre basculant (9) est basculé vers le bas autour de l'axe de basculement (19), de la position relevée à une position abaissée, dans laquelle les éléments (26) de traitement de récolte sont orientés pour traiter une récolte qui se trouve en vrac sur le sol (4), auquel cas on a atteint la position de fonctionnement,
**caractérisé en ce que** chaque bras-support (20, 21) est pourvu d'au moins un élément d'actionnement (31) qui est disposé entre deux parties (24, 24A) de bras-support adjacentes dudit bras-support (20, 21) qui sont articulées l'une sur l'autre et les éléments d'actionnement (31) sont configurés pour amener et/ou maintenir sensiblement en ligne l'une avec l'autre lesdites parties (24, 24A) de bras-support de chaque bras-support (20, 21) pendant que les bras-supports (20, 21) sont balancés vers l'extérieur de la position pliée à la position déployée, de telle manière que, dans la position déployée des bras-supports (20, 21), le centre de gravité (Z) du dispositif (8) de traitement de récolte, vu dans la direction de l'axe longitudinal (5) du train roulant (3), est situé derrière l'axe de basculement (19), et le dispositif (8) de traitement de récolte descend en position de fonctionnement en raison de son propre poids.

2. Dispositif agricole selon la revendication 1, dans lequel les éléments d'actionnement comprennent chacun un vérin hydraulique (31).

3. Dispositif agricole selon la revendication 2, dans lequel les vérins hydrauliques (31) sont chacun à simple effet.

4. Dispositif agricole selon l'une quelconque des revendications précédentes, dans lequel chaque élément d'actionnement (31) est configuré de telle manière que la charnière entre les deux parties (24, 24A) articulées de bras-support entre lesquelles est disposé ledit élément d'actionnement (31) peut être libérée par ledit élément d'actionnement (31) quand le dispositif (8) de traitement de récolte est en position de fonctionnement.

5. Dispositif agricole selon l'une quelconque des revendications précédentes, dans lequel un élément d'actionnement (31) est disposé entre une partie (24A) extérieure de bras-support et une partie (24) adjacente de bras-support de chaque bras-support (20, 21).

6. Dispositif agricole selon la revendication 5, dans lequel chaque bras-support (20, 21) comprend un second élément d'actionnement (31) qui est disposé entre deux parties (24) de bras-support qui sont situées entre, d une part, la partie (24A) extérieure de bras-support et la partie (24) adjacente de bras-support et, d autre part, I axe de pivotement (22, 23) dudit bras-support (20, 21).

7. Dispositif agricole selon l'une quelconque des revendications précédentes, dans lequel les bras-supports (20, 21) peuvent être mis en place entre leur position pliée et leur position déployée par, dans chaque cas, un vérin hydraulique (32) de déploiement à double effet.

8. Dispositif agricole selon l'une quelconque des revendications précédentes, dans lequel le cadre basculant (9) peut être déplacé de la position abaissée à la position relevée par un vérin hydraulique (10) de levage.

9. Dispositif agricole selon la revendication 8, dans lequel le vérin hydraulique (10) de levage est à simple effet.

10. Dispositif agricole selon la revendication 8, dans lequel le vérin hydraulique (10) de levage est équipé d un piston (13) comportant une partie de racleur à simple effet et une partie de racleur à double effet qui est plus petite que la portion de racleur à simple effet, et
dans lequel le train roulant (3) est équipé de deux supports (40) pour soutenir les bras-supports (20, 21) respectifs quand le dispositif (8) de traitement de récolte est en position de transport, et
dans lequel le dispositif (8) de traitement de récolte peut se déplacer de la position de transport à la position de fonctionnement:
- en soulevant chacun des bras-supports (20, 21), en partant de la position de transport, des supports (40) en actionnant le piston (13) du vérin (10) de levage dans une première direction sur la partie de racleur à double effet, le cadre basculant (9) étant basculé de la position relevée à une position relevée intermédiaire, dans laquelle les axes de pivotement (22, 23) des bras-supports (20, 21) sont encore sensiblement verticaux, et
- en balançant par la suite chacun des bras-supports (20, 21) de la position pliée à la position déployée, et
- en basculant ensuite le cadre basculant (9) vers le bas de la position relevée intermédiaire à la position abaissée en raison du propre poids du dispositif (8) de traitement de récolte, le piston (13) du vérin (10) de levage étant entraîné dans la première direction sur la partie de racleur à simple effet, et
- dans lequel le dispositif (8) de traitement de récolte peut se déplacer de la position de fonctionnement à la position de transport :
- en basculant le cadre basculant (9) vers le haut jusqu'à ce qu'il soit en position relevée intermédiaire en actionnant le piston (13) du vérin (10) de levage dans une seconde direction à l'opposé de la première direction, sur la partie de racleur à simple effet, et
- en balançant par la suite chacun des bras-supports (20, 21) de la position déployée à la position pliée, et
- en abaissant ensuite chacun des bras-supports (20, 21) sur les supports (40) en déplaçant le piston (13) du vérin (10) de levage dans la seconde direction sur la partie de racleur à double effet, le cadre basculant (9) étant basculé de la position relevée intermédiaire à la position relevée.

11. Machine agricole selon l'une quelconque des revendications précédentes, dans laquelle la machine agricole est une faneuse.

12. Dispositif agricole selon l'une quelconque des revendications précédentes, comprenant un tracteur, dans lequel la remorque peut être attelée au tracteur.

13. Procédé pour traiter une récolte qui se trouve en vrac sur le sol, par exemple de l'herbe fauchée, dans lequel on utilise un dispositif agricole (1) qui comprend une remorque (2), laquelle remorque (2) peut être attelée à un tracteur et est pourvue de :
- un train roulant (3) ayant un axe longitudinal central (5), lequel train roulant (3) est pourvu de :
- un élément d'attelage (6) pour l'atteler à un tracteur,
- une pluralité de roues (7) au moyen desquelles le train roulant (3) peut se déplacer sur le sol (4),
- un dispositif (8) de traitement de récolte qui est pourvu de :
- un cadre basculant (9) qui est raccordé au train roulant (3) de façon à pouvoir basculer autour d'un axe de basculement (19) qui est sensiblement transversal par rapport à l'axe longitudinal (5) du train roulant (3),
- deux bras-supports (20, 21) qui s'étendent de part et d'autre du cadre basculant (9), lesquels bras-supports (20, 21) sont chacun raccordés au cadre basculant (9) de façon à pouvoir pivoter autour d'un axe de pivotement (22, 23) qui est sensiblement transversal par rapport à l'axe de basculement (19), et lesquels bras-supports (20, 21) comprennent chacun une pluralité de parties (24, 24A) de bras-support qui sont raccordées l'une à l'autre de façon à pouvoir s'articuler autour d'axes charnières (25) qui sont sensiblement parallèles à l'axe de pivotement (22, 23) dudit bras-support (20, 21),
- des éléments (26) de traitement de récolte qui sont disposés rotatifs sur les parties (24, 24A) de bras-support des bras-supports (20, 21),
- dans lequel le procédé comprend:
- le déplacement du dispositif (8) de traitement de récolte d'une position de transport à une position de fonctionnement,
dans lequel, en position de transport, le cadre basculant (9) présente une position relevée dans laquelle les axes de pivotement (22, 23) des bras-supports (20, 21) sont sensiblement verticaux, et chaque bras-support (20, 21) présente une position pliée, dans laquelle ledit bras-support (20, 21) est sensiblement parallèle à l'axe longitudinal (5) du train roulant (3), et
quand on déplace le dispositif de traitement de récolte de la position de transport à la position de fonctionnement, balancer chaque bras-support (20, 21) vers l'extérieur autour de son axe de pivotement (22, 23) de la position pliée à une position déployée, dans lequel ledit bras-support (20, 21) se déploie vers l'extérieur sensiblement transversalement par rapport à l'axe longitudinal (5) du train roulant (3), et par la suite basculer le cadre basculant (9) vers le bas autour de l'axe de basculement (19) de la position relevée à une position abaissée, dans laquelle les éléments (26) de traitement de récolte sont orientés pour traiter une récolte qui se trouve en vrac sur le sol (4), auquel cas on a atteint la position de fonctionnement,
**caractérisé en ce que** chaque bras-support (20, 21) est pourvu d'au moins un élément d'actionnement (31) qui est disposé entre deux parties (24, 24A) de bras-support adjacentes dudit bras-support (20, 21) qui sont articulées l'une sur l'autre, et lesdites parties (24, 24A) de bras-support de chaque bras-support (20, 21) sont amenées et/ou maintenues sensiblement en ligne l'une avec l'autre pendant que les bras-supports (20, 21) sont balancés vers l'extérieur de la position pliée à la position déployée, de telle manière que, dans la position déployée des bras-supports (20, 21), le centre de gravité (Z) du dispositif (8) de traitement de récolte, vu dans la direction de l'axe longitudinal (5) du train roulant (3), est situé derrière l'axe de basculement (19), et le dispositif (8) de traitement de récolte descend en position de fonctionnement en raison de son propre poids.

14. Procédé selon la revendication 13, dans lequel les éléments d'actionnement comprennent chacun un vérin hydraulique (31).

15. Procédé selon la revendication 14, dans lequel les vérins hydrauliques (31) sont chacun à simple effet.

16. Procédé selon l'une quelconque des revendications 13 à 15, comprenant le traitement de la récolte qui se trouve en vrac sur le sol (4) par les éléments (26) de traitement de récolte quand le dispositif (8) de traitement de récolte est en position de fonctionnement, dans lequel chaque élément d'actionnement (31) est configuré de telle manière que la charnière entre les deux parties (24, 24A) articulées de bras-support entre lesquelles est disposé ledit élément d'actionnement (31) est libérée par ledit élément d'actionnement (31) quand le dispositif (8) de traitement de récolte est en position de fonctionnement.
